Europäisches Patentamt

European Patent Office

Office européen des brevets

(19)

(11) Veröffentlichungsnummer : **0 157 353**
**B1**

(12) **EUROPÄISCHE PATENTSCHRIFT**

(45) Veröffentlichungstag der Patentschrift :
13.04.88

(51) Int. Cl.⁴ : **B 65 G 17/34**, B 65 G 47/56,
B 65 G 37/00

(21) Anmeldenummer : 85103623.6

(22) Anmeldetag : 27.03.85

(54) **Fördervorrichtung.**

(30) Priorität : 04.04.84 DE 3412575

(43) Veröffentlichungstag der Anmeldung :
09.10.85 Patentblatt 85/41

(45) Bekanntmachung des Hinweises auf die Patenter-
teilung : 13.04.88 Patentblatt 88/15

(84) Benannte Vertragsstaaten :
AT BE CH FR GB IT LI LU NL SE

(56) Entgegenhaltungen :
CH-A-   566 249
DE-A- 2 537 943
DE-A- 3 029 620

(73) Patentinhaber : **Rudolf Geiger Maschinenbau**
**D-8553 Ebermannstadt/Rüssenbach (DE)**

(72) Erfinder : **Geiger, Rudolf**
**D-8553 Ebermannstadt/Rüssenbach (DE)**

(74) Vertreter : **Patentanwälte Czowalla . Matschkur +**
**Partner**
**Dr.-Kurt-Schumacher-Strasse 23 Postfach 9109**
**D-8500 Nürnberg 11 (DE)**

## Beschreibung

Die Erfindung bezieht sich auf eine Fördervorrichtung, insbesondere Staurollenkettenförderer oder Doppelgurtbandförderer, mit beidseits auf beabstandeten Längsförderern aufliegenden Werkstückträgern.

Ein wesentliches Problem bei derartigen Fördervorrichtungen ist die Rückführung der Werkstückträger in die Ausgangslage. Relativ problemlos ist diese Rückführung bei karusellartigen Förderanlagen, bei denen das Förderband endlos in einer horizontalen Ebene in einer geschlossenen Bahn umläuft. Derartige Förderanlagen sind jedoch wegen des hohen Platzbedarfs in vielen Fällen nicht einsetzbar.

Darüber hinaus sind auch bereits Fördervorrichtungen vorgeschlagen worden, bei denen die Werkstückträger mit den seitlichen Längsförderern verbunden sind derart, daß sie quasi an der hinteren Umlenkstelle auf den Kopf gestellt werden und mit dem Untertrumm wieder in die Ausgangsstellung zurücklaufen (DE-A-30 29 620). Diese Konstruktion ist jedoch nur für sehr spezielle Anwendungszwecke einsetzbar und eignet sich insbesondere nicht für Fördervorrichtungen, bei denen große und schwere Paletten und ähnliche schwere Bauteile bewegt werden müssen, da die hierfür benötigten Werkstückträger viel zu schwer sind, als daß sie hängend am Untertrumm des Förderers zurückbewegt werden können.

Aus diesem Grund ist bei den bislang bekannten Fördervorrichtungen üblicherweise vorgesehen, daß zum Rücktransport eine in einer anderen Höhenebene angeordnete Fördereinrichtung verwendet wird, wobei entweder an den Enden des Förderers oder je nach den speziellen Erfordernissen auch an dazwischenliegenden Stellen Lifttürme eingebaut sind, an denen die Werkstückträger seitlich von der Fördervorrichtung abgenommen, durch einen Lift in eine darüber oder darunter liegende Höhenebene transportiert und durch seitliche Verschiebung wiederum auf einen dort befindlichen Förderer aufgegeben werden. Abgesehen von der Kompliziertheit dieser Anordnungen, insbesondere wenn es noch darum geht, an mehreren Zwischenstellen eine solche Umsetzung zu ermöglichen, haben sie wiederum den Nachteil, daß durch das seitliche Ausschieben vom Förderer ein erheblicher seitlicher Platzbedarf besteht, der in vielen Fällen nicht befriedigt werden kann.

Der Erfindung liegt daher die Aufgabe zugrunde, eine Fördervorrichtung der eingangs genannten Art so auszugestalten, daß ohne zusätzlichen Platzbedarf ein einfaches Umsetzen und Wiederrückführen der Werkstückträger möglich ist.

Zur Lösung dieser Aufgabe ist erfindungsgemäß vorgesehen, daß die Werkstückträger eine verstellbare Breite aufweisen, derart, daß sie unter Beibehaltung ihrer horizontalen Lage zwischen den seitlichen Längsförderern hindurch mittels eines zwischen den Längsförderern verstellbaren Lifts vertikal in höhenversetzte Förderebenen bewegbar sind.

Die Erfindung nützt dabei den sowieso vorhandenen notwendigen Abstand zwischen den seitlich der Werkstückträger angeordneten Längsförderern aus, um dazwischen das Umsetzen der Werkstückträger stattfinden zu lassen. Dies ermöglicht nicht nur eine erhebliche Breiteneinsparung, die auch dann noch besteht, wenn man den Abstand zwischen den Längsförderern etwas erhöht, um einen ausreichenden lichten Abstand entsprechend der größten Breite der zu bewegenden Werkstücke oder Paletten oder sonstigen Teile zu haben, sondern darüber hinaus auch eine erheblich einfachere Umsetzung ermöglicht, als es bei den bekannten Lifttürmen mit kombinierten Seiten- und Vertikalverschiebungen der Werkstückträger der Fall ist.

In besonders einfacher und zweckmäßiger Ausgestaltung der Erfindung kann vorgesehen sein, daß jeder Werkstückträger seitliche, an querverschieblich gelagerten Führungstragbolzen befestigte Auflageschienen aufweist, die durch eine gemeinsame Verstelleinrichtung gegenläufig verschiebbar sind.

Ein solcher Aufbau ist konstruktiv sehr einfach zu lösen und ermöglicht eine sehr flexible Anpassung an die jeweils gegebenen Arbeitsbedingungen. So können die Führungstragbolzen, um größere Verschiebelängen und damit Breitenveränderungen zu ermöglichen, beispielsweise versetzt angeordnet sein, so daß sie sich aneinander vorbeibewegen und dementsprechend für jeden der Führungsbolzen praktisch die gesamte Stellplatte des Werkstückträgers zur Verfügung steht. Darüber hinaus ist der Aufbau auch so einfach, daß er ohne wesentliche Verteuerung gegenüber herkömmlichen Werkstückträgern realisiert werden kann, was bei größeren Förderanlagen angesichts der Vielzahl der dabei benötigten Werkstückträger ebenfalls von erheblicher Bedeutung ist.

Um ein durch äußere Druckkräfte hervorgerufenes Einschieben der Auflageschienen aus ihrer nach außen verstellten Fördertransportstellung zu verhindern und damit sicherzustellen, daß nicht durch irgendwelche solche äußeren Kräfte die Werkstückträger dann zwischen den Förderern einfach hindurchfallen können, sollen in Weiterbildung der Erfindung Verstellrasten vorgesehen sein, die vorzugsweise durch mindestens eine teilweise in eine Vertiefung am Umfang der Drehscheibe eingreifende federbelastete Rastkugel gebildet sind.

Die Verstelleinrichtung, mit Hilfe derer die Auflageschienen nach außen ausfahrbar bzw. nach innen in die verschmälerte Stellung einziehbar sind, kann in unterschiedlichster Weise ausgebildet sein. So wäre es insbesondere möglich, hierfür Antriebsvorrichtungen in den Werkstückträgern vorzusehen, die durch Passieren von Kontakten an bestimmten Stellen betätigt werden. Bei

spielsweise könnte entweder ein Elektromotor vor gesehen sein, der an einer bestimmten Stelle kontaktiert und in Betrieb gesetzt wird, oder aber man könnte auch eine pneumatische Verstelleinrichtung in ähnlicher Weise regeln.

Für die weitaus meisten Fälle derartiger Fördereinrichtungen ist es jedoch zweckmäßiger, eine ganz einfach ausgebildete Verstellvorrichtung vorzusehen, die durch einfaches mechanisches Zusammenwirken von Teilen der Werkstückträger mit der Umsetzplatte des Lifts beim Einlaufen des Werkstückträgers in die Liftposition betätigt wird.

In einer ersten Variante könnte die Verstelleinrichtung mit den Auflageschienen verbundene Mitnehmerzapfen und Führungskulissen an der Umsetzplatte des Lifts sowie Mitnehmer an den Längsförderern umfassen. Beim Einlaufen auf die Umsetzplatte eines Lifts werden die Mitnehmerzapfen durch die sich aneinander annähernden Rinnen der Führungskulissen zwangsweise mit nach innen bewegt, so daß entsprechend auch die Auflageschienen nach innen verschoben werden. Um dabei sicherzustellen, daß die Auflageschienen weiter nach innen bewegt werden, als der Abstand der Längsförderer, sind zweckmäßigerweise geeignete· Mitnehmer an den Längsförderern vorgesehen, die eine weitere Längsverschiebung der Werkstückträger, die für die Verschiebung in den Führungskulissen ja erforderlich ist, auch dann sicherstellen, wenn die Auflageschienen gar nicht mehr auf den Längsförderern aufliegen.

Als besonders zweckmäßig hat sich jedoch eine weitere Variante erwiesen, bei der die Verstelleinrichtung eine durch eine Betätigungsvorrichtung in der Umsetzplatte des Lifts bewegbare Drehscheibe enthält, deren Drehbewegung durch Stellglieder in eine Verschiebebewegung der Auflageschienen umgesetzt wird.

Neben einer Bewegungsumsetzung dadurch, daß die Drehscheibe mit einer Zähnung versehen ist, bzw. mit einem Zahnrad gekoppelt ist, das mit Zahnschubstangen kämmt, die an den Auflageschienen befestigt sind, ergibt sich ein besonders zweckmäßiger, weil konstruktiv noch einfacherer Aufbau dadurch, daß Schwenkverstellhebel vorgesehen sind, die beidends an der Drehscheibe, bzw. einer der Auflageschienen, angelenkt sind. Durch einen Mitnehmersteg an der Umsetzplatte des Lifts, der in eine in der Normalstellung in Förderrichtung liegende Rinne in der Unterseite der Drehscheibe eingleitet, kann die Drehverstellung der Drehscheibe sehr einfach mit Hilfe eines im Lift angeordneten Motors erreicht werden, der durch einen Sensor beim vollständigen Auflaufen eines Werkstückträgers auf die Umsetzplatte betätigt wird.

Dabei ist gemäß einem weiteren Merkmal der Erfindung vorgesehen, daß die Führungen für einander gegenüberstehende Führungstragbolzen auf der Unterseite der eigentlichen Tragplatte des Werkstückträgers in Abstand voneinander angeordnet sind und daß auf der Umsetzplatte des Lifts Aufsätze mit zu den Führungen fluchtenden Bohrungen angeordnet sind, die zwischen den Führungen zu liegen kommen und in welche die Führungstragbolzen als Indexbolzen eingreifen können. Auf diese Weise ergibt sich eine zwangsweise, überhaupt keinen zusätzlichen Aufwand erfordernde Indexierung, d. h. Verriegelung der Werkstückträger in der gewünschten Position auf den Umsetzplatten des Lifts.

Durch die erfindungsgemäße Umsetzbarkeit der in ihrer Breite verstellbaren Werkstückträger zwischen den beiden beabstandeten Längsförderern ergibt sich eine besonders günstige weitere Ausgestaltungsmöglichkeit einer Fördervorrichtung, die zu einer erheblichen Vereinfachung gegenüber den bislang bekannten Fördervorrichtungen führt. So ist es nämlich bei den bislang bekannten Fördervorrichtungen grundsätzlich erforderlich, daß nur jeweils das Obertrumm eines Förderers ausgenutzt wird, d. h. daß für den Transport in unterschiedlichen Höhenebenen ein oberer Förderer mit Ober- und Untertrumm und ein unterer Förderer, ebenfalls mit hinlaufendem Obertrumm und zurücklaufendem Untertrumm, verwendet wird. Die Bewegung zwischen den Längsförderern hindurch ermöglicht es aber, das Untertrumm des Förderers — das dann in einem entsprechenden Abstand zum Obertrumm geführt wird — als den Rückkehrförderer mit zu verwenden, d. h. die Umsetzung der Werkstückträger erfolgt vom Obertrumm der Längsförderer auf die Oberseite des Untertrumms der gleichen Längsförderer. Man erspart auf diese Art und Weise sowohl die zweiten Antriebsvorrichtungen, oder aber die Kupplungsverbindung, als auch insbesondere die Hälfte der Ketten- oder Förderbandlängen, was sowohl vom konstruktiven Aufwand als auch insbesondere von den Kosten einen ganz entscheidenden Vorteil bedeutet.

Weitere Vorteile, Merkmale und ·Einzelheiten der Erfindung ergeben sich aus der nachfolgenden Beschreibung eines Ausführungsbeispiels sowie anhand der Zeichnung. Dabei zeigen :

Fig. 1 die perspektivische Ansicht eines auf den Längsförderern angeordneten Werkstückträgers,

Fig. 2 die perspektivische Darstellung eines Werkstückträgers in seiner ausgefahrenen Stellung,

Fig. 3 die Draufsicht des Werkstückträgers in ausgefahrener Stellung,

Fig. 4 die perspektivische Darstellung der Liftstellung des Werkstückträgers,

Fig. 5 die Draufsicht des Werkstückträgers in Liftstellung,

Fig. 6 einen Schnitt nach Linie VI-VI in Fig. 5,

Fig. 7 die schematische Darstellung der Werkstückträgerverstellung mittels einer Führungskulisse und

Fig. 8 die schematische Darstellung der Umsetzung des Werkstückträgers mittels eines zwischen den Längsförderern angeordneten Lifts.

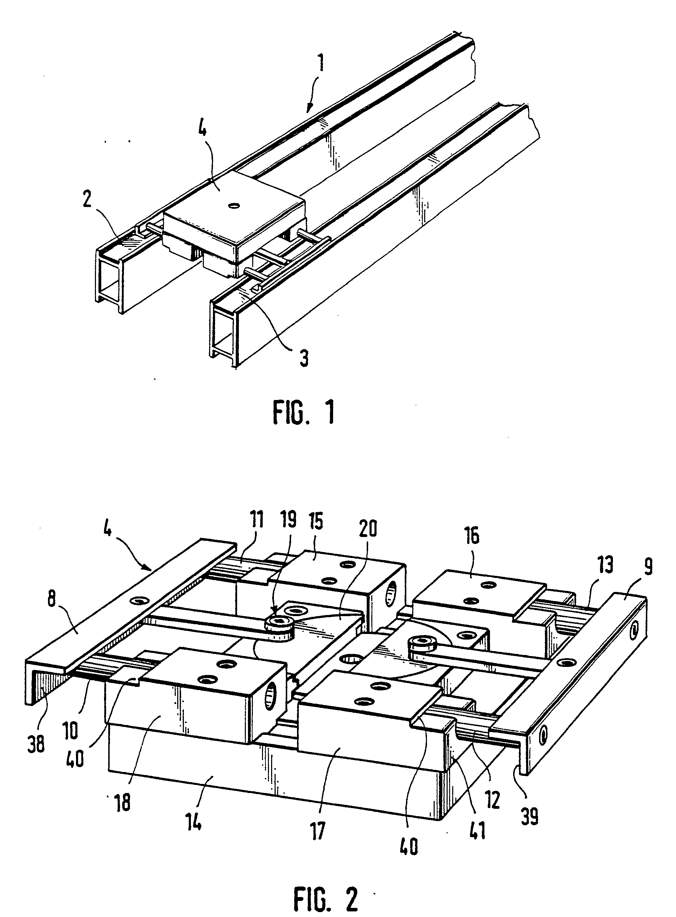

Fig. 1 zeigt einen Abschnitt einer Fördereinrichtung 1 mit zwei parallel zueinander geführten Längsförderern 2, 3, die als Staurollenkettenförderer oder als Gurtbandförderer ausgebildet sein können und dazu dienen, Werkstücke insbesondere zwischen verschiedenen Bearbeitungs- und

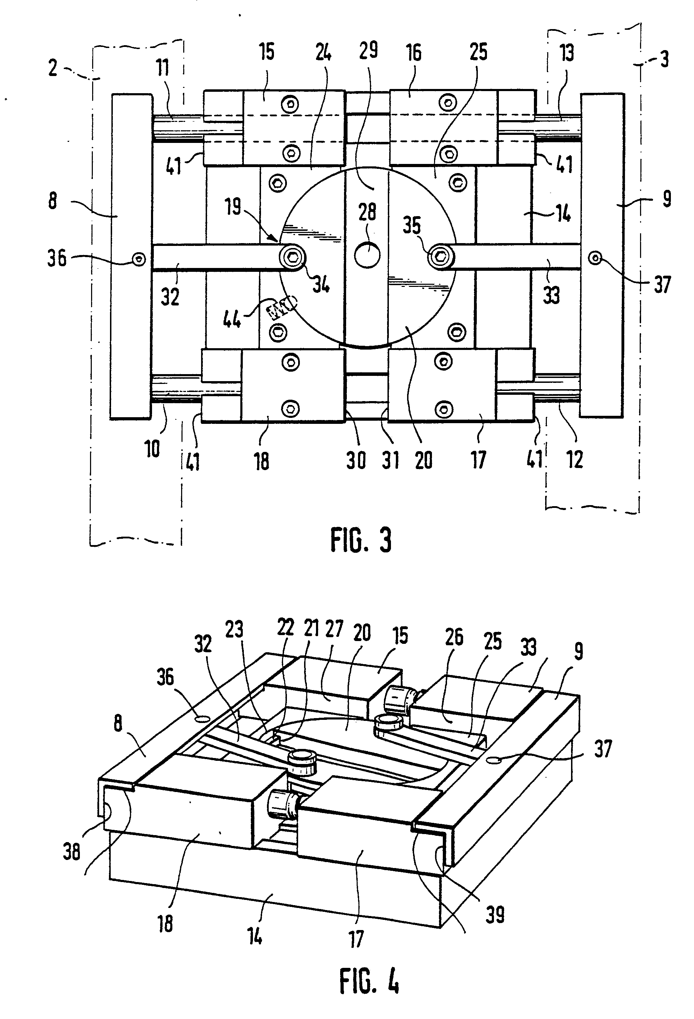

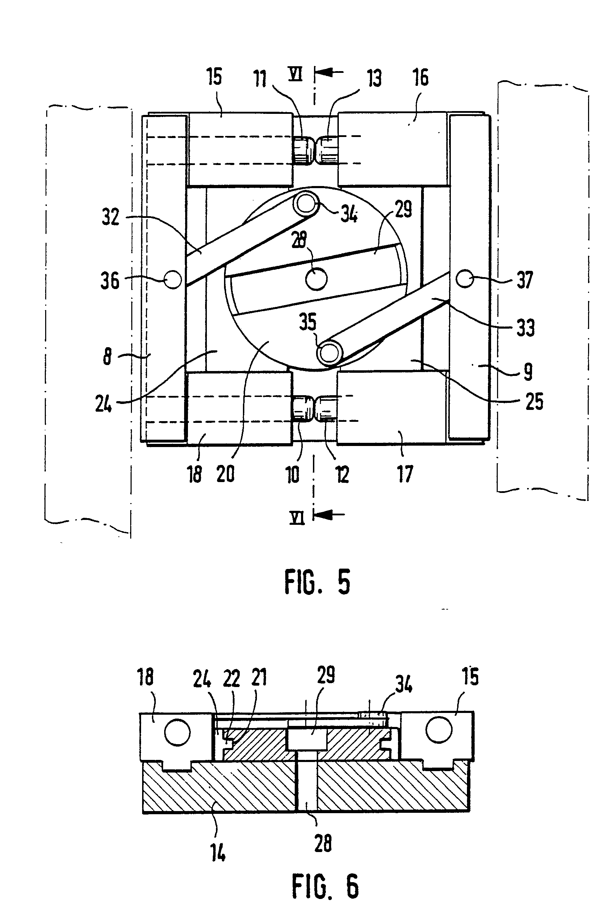

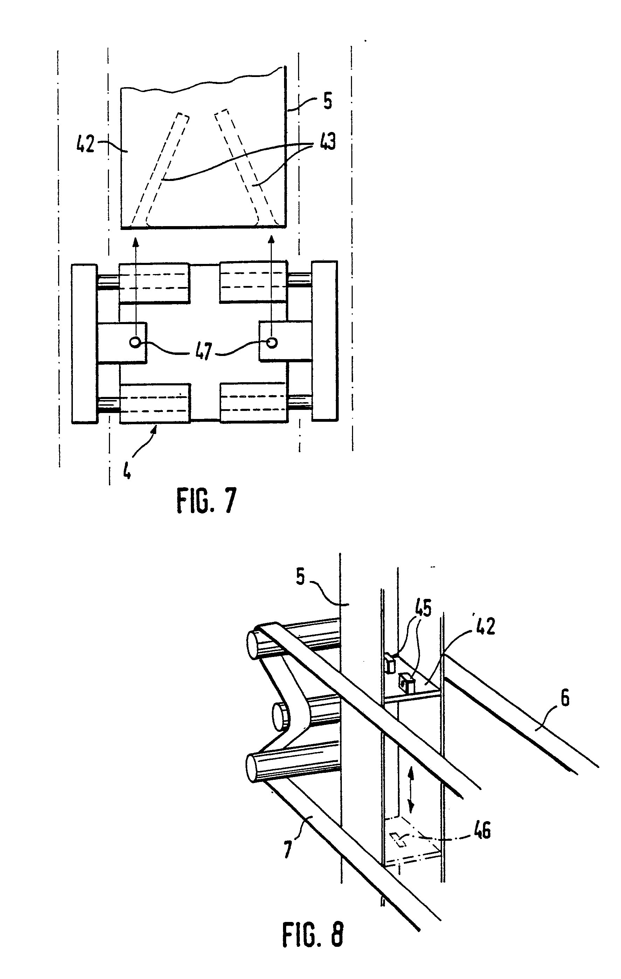

Montagestationen zu transportieren, wobei zur Vereinfachung der Darstellung den verschiedenen Transportpositionen zugeordnete Werkzeugeinrichtungen und Bearbeitungsstationen weggelassen sind. Zur Halterung der zu bearbeitenden Werkstücke dienen Werkstückträger 4, die in dem jeweiligen Bearbeitungsprozeß und der Transportgeschwindigkeit der Fördervorrichtung angepaßten Abständen aufeinanderfolgend angeordnet sind. Die Besonderheit des erfindungsgemäßen Werkstückträgers 4 besteht gegenüber vorbekannten Ausführungsformen darin, daß er in seiner Breite verstellbar ist zwischen einer in Fig. 2 und 3 dargestellten ausgefahrenen Stellung, in welcher er beiderseits auf den seitlich angeordneten Längsförderern 2, 3 aufliegt und einer in Fig. 4 und 5 veranschaulichten Liftstellung, in der seine Breite soweit verringert werden kann, daß der Werkstückträger 4 mittels eines Lifts 5, wie in Fig. 8 schematisch dargestellt, vom Obertrumm 6 des Längsförderers 1 auf dessen Untertrumm 7 umgesetzt werden kann, das die Rückführung des leeren Werkstückträgers 4 zur erneuten Beladung mit Werkstücken am Anfang der Fertigungsstrecke übernimmt.

Zu seiner Halterung und Führung auf den voneinander beabstandet angeordneten Längsförderern 2, 3 ist der Werkstückträger 4 mit Auflageschienen 8, 9 ausgestattet, die an querverschieblich gelagerten Führungsbolzen 10, 11, 12, 13 befestigt sind, welche in zylindrischen Führungen unter der Werkstückauflageplatte 14 angeordneter Halterungen 15, 16, 17, 18 gleiten.

Um die Auflageschienen 8, 9 des Werkstückträgers 4 zwischen ihrer aus Fig. 2 und 3 ersichtlichen ausgefahrenen Transportstellung für aufliegende und zu bearbeitende Werkstücke in ihre in Fig. 5 und 6 veranschaulichte Liftstellung zu bringen, und sie nach Erreichen der Ausgangsposition auf der Förderanlage wieder auseinanderfahren zu können, ist eine Verstelleinrichtung 19 vorgesehen, mit deren Hilfe die beiden Auflageschienen 8, 9 in zueinander entgegengesetzter Richtung gleichzeitig verschiebbar sind.

Die Verstelleinrichtung 19 enthält eine Drehscheibe 20 mit einer umlaufenden Nut 21, in die ein kreisringförmiger Absatz 22 der Ausnehmung 23 einer Halterung eingreift, die von zwei Formteilen 24, 25 gebildet wird, welche an der Werkstückauflageplatte 14 voneinander beabstandet zwischen den Halterungen 15 und 18 bzw. 16 und 17 und an deren Längsflächen 26, 27 anliegend befestigt sind.

Die Drehscheibe 20 und die Werkstückauflageplatte 14 weisen eine zentrische durchgehende Bohrung 28 auf. Außerdem ist in der Unterseite der Drehscheibe 20 eine diagonal verlaufende Längsrinne 29 vorgesehen, deren Breite etwa gleich dem Abstand der einander zugekehrten Endflächen 30, 31 der Halterungen 15 und 16 bzw. 17 und 18 in der ausgefahrenen Stellung des Werkstückträgers 4 ist.

Beiderseits der Längsrinne 29 sind an den beiden unteren Hälften der Drehscheibe 20 Schwenkverstellhebel 32, 33 mittels der Befestigungselemente 34, 35 angelenkt. Mit ihrem entgesetzten Ende sind die Schwenkverstellhebel 32, 33 mit den Führungsschienen 8, 9 beispielsweise mittels diese Schienen durchsetzender Befestigungsglieder 36, 37 gelenkig verbunden.

Um die im wesentlichen aus der Drehscheibe 20 und den Schwenkverstellhebeln 32, 33 bestehende Verstelleinrichtung 19 zu betätigen, die bewirkt, daß sich die Führungsschienen 8, 9 soweit aufeinander zubewegen, bis sie mit den Innenflächen ihrer Schenkel 38, 39 den Aussparungen 40 und den Außenwänden 41 der Halterungen 15, 16, 17, 18 anliegen, wodurch die Drehscheibe 20 mit Hilfe der Schwenkverstellhebel 32, 33 im Gegenuhrzeigersinn in ihre in Fig. 5 dargestellte Position gebracht wird, in der die Führungsbolzen 10 und 12 bzw. 11 und 13 mit ihren freien Enden aneinandergrenzen, können elektrische, pneumatische oder einfache mechanische Auslöse- und Betätigungselemente vorgesehen sein.

Beispielsweise kann die Breitenverstellung des Werkstückträgers 4 auf mechanischem Wege durch Zusammenwirken der Umsetzplatte 42 des Lifts 5 mit Teilen des Werkstückträgers 4 ausgelöst werden, sobald dieser eine der Liftpositionen der Förderanlage erreicht.

Um dies zu bewerkstelligen, können die Umsetzplatten 42 des Lifts 5 mit in Fig. 7 schematisch dargestellten Führungskulissen 43 ausgestattet sein, durch die, wenn der Werkstückträger 4 die Umsetzplatte 42 eines Lifts 5 erreicht, mit dessen Auflageschienen 8, 9 verbundene Mitnehmerzapfen 47 durch die sich einander nähernden Rinnen der Führungskulisse 43 zwangsweise nach innen bewegt und dadurch die Auflageschienen 8, 9 entsprechend soweit nach innen verschoben werden, daß sie nicht mehr auf den Längsförderern 2, 3 aufliegen und ihre Breite genügend verringert ist, um die Werkstückträger 4 mit Hilfe des Lifts 5 vom Obertrumm 6 auf das Untertrumm 7 oder umgekehrt umzusetzen.

Dieses Verringern des Abstandes der Führungsschienen 8, 9 durch Verschwenken der Drehscheibe 20 kann bei einer anderen vorteilhaften Ausgestaltung der Erfindung mittels an der Umsetzplatte 42 des Liftes 4 angebrachter, mit einem Verstellmotor verbundener und drehbar gelagerter Bolzen, Mitnehmer oder Verstellstege 46 bewirkt werden, die in einer in der Drehscheibe 20 vorgesehenen Rinne gleitend und dessen Bewegung mit Hilfe eines im Lift 5 angeordneten Motors durch einen Sensor ausgelöst wird, sobald der Werkstückträger 4 die Umsetzplatte 42 erreicht hat.

Um ein ungewolltes, etwa durch Einwirkung äußerer Druckkräfte hervorgerufenes Aufeinanderzubewegen der Auflageschienen 8, 9 aus ihrer auseinandergefahrenen Fördertransportstellung in ihre Liftstellung zu verhindern, die das Hindurchfallen der Werkstückträger 4 zwischen den Längsförderern 2, 3 zur Folge haben könnte, soll der Werkstückträger 4 in vorteilhafter Ausgestaltung der Erfindung mit seine ungewollte Breitenverstellung verhindernden Verstellrasten 44 ausgestattet sein, die bei einer in Fig. 3 dargestellten Ausführungsform aus einer federbelasteten Rastkugel besteht, die in eine am Umfang der Drehscheibe 20 vorgesehene Vertiefung eingreift.

Die konstruktive Ausgestaltung des breitenverstellbaren Werkstückträgers 4 nach der Erfindung soll nicht auf die dargestellten Ausführungsbeispiele beschränkt sein. Sie kann beispielsweise dahingehend abgewandelt sein, daß die Drehscheibe 20 mit einer Zähnung versehen bzw. mit einem Zahnrad gekoppelt ist, das mit an den Auflageschienen 8, 9 befestigten Zahnschubstangen kämmt.

Ferner können abweichend von der oben beschriebenen Ausbildung des Werkstückträgers 4 dessen Führungsbolzen 10 und 12 bzw. 11 und 13 nicht zueinander fluchtend, sondern derart gegeneinander versetzt angeordnet sein, daß sie sich nicht wie oben beschrieben aufeinander zubewegen, bis sie zusammenstoßen, sondern statt dessen aneinander vorbeibewegen und dadurch eine größere Breitenveränderung ermöglichen.

Abschließend sei noch darauf hingewiesen, daß der Werkstückträger 4 in Fig. 1 in seiner Gebrauchsstellung mit obenliegender Werkstückauflageplatte 14 dargestellt ist, in den übrigen perspektivischen Ansichten und Draufsichten jedoch um 180° gedreht, um die an seiner Unterseite befindlichen Verstellelemente erkennbar zu machen.

**Patentansprüche**

1. Fördervorrichtung, insbesondere Staurollenkettenförderer oder Doppelgurtbandförderer, mit beidseits auf beabstandeten Längsförderern (2, 3) aufliegenden Werkstückträgern (4), dadurch gekennzeichnet, daß die Werkstückträger (4) eine verstellbare Breite aufweisen, derart, daß sie unter Beibehaltung ihrer horizontalen Lage zwischen den seitlichen Längsförderern (2, 3) hindurch mittels eines zwischen den Längsförderern (2, 3) verstellbaren Lifts (5) vertikal in höhenversetzte Förderebenen bewegbar sind.

2. Fördervorrichtung nach Anspruch 1, dadurch gekennzeichnet, daß jeder Werkstückträger (4) seitliche, an querverschieblich gelagerten Führungstragbolzen (10, 11, 12, 13) befestigte Auflageschienen (8, 9) aufweist, die durch eine gemeinsame Verstelleinrichtung (19) gegenläufig verschiebbar sind.

3. Fördervorrichtung nach Anspruch 2, gekennzeichnet durch das Einschieben der Auflageschienen (8, 9) durch äußere Druckkräfte verhindernde Verstellrasten (44).

4. Fördervorrichtung nach einem der Ansprüche 1 bis 3, dadurch gekennzeichnet, daß die Verstellrasten (44) durch mindestens eine teilweise in eine Vertiefung am Umfang der Drehscheibe (20) eingreifende federbelastete Rastkugel gebildet sind.

5. Fördervorrichtung nach einem der Ansprüche 1 bis 4, dadurch gekennzeichnet, daß die Verstelleinrichtung (19) mit den Auflageschienen (8, 9) verbundene Mitnehmerzapfen (47) und Führungskulissen (43) an der Umsetzplatte (42) des Lifts (5), sowie Mitnehmer an den Längsförderern umfaßt.

6. Fördervorrichtung nach einem der Ansprüche 1 bis 4, dadurch gekennzeichnet, daß die Verstelleinrichtung (19) eine durch eine Betätigungsvorrichtung in der Umsetzplatte (42) eines Lifts (5) bewegbare Drehscheibe (20) enthält, deren Drehbewegung durch Stellglieder in eine Verschiebebewegung der Auflageschienen (8, 9) umgesetzt wird.

7. Fördervorrichtung nach Anspruch 6, dadurch gekennzeichnet, daß die Drehscheibe (20) mit einer mit Zahnschubstangen an den Auflageschienen kämmenden Zähnung versehen ist.

8. Fördervorrichtung nach Anspruch 6, gekennzeichnet durch Schwenkverstellhebel (32, 33), die beidends an der Drehscheibe (20), bzw. einer der Auflageschienen (8, 9) angelenkt sind.

9. Fördervorrichtung nach einem der Ansprüche 5 bis 7, dadurch gekennzeichnet, daß auf der Umsetzplatte (42) des Lifts (5) ein mit einem Verstellmotor verbundener, drehbar gelagerter Verstellsteg (46) vorgesehen ist, der in eine Längsrinne (29) der Unterseite der Drehscheibe (20) eingreift.

10. Fördervorrichtung nach einem der Ansprüche 1 bis 8, dadurch gekennzeichnet, daß die Führungen für einander gegenüberstehende Führungstragbolzen (10, 11, 12, 13) im Abstand voneinander angeordnet sind und daß auf der Umsetzplatte des Lifts (5) zwischen die Führungen einragende Aufsätze (45) mit zu den Führungen fluchtenden Bohrungen angeordnet sind, in welche die Führungstragbolzen (10, 11, 12, 13) als Indexbolzen eingreifen können.

11. Fördervorrichtung nach einem der Ansprüche 1 bis 10, dadurch gekennzeichnet, daß die Werkstückträger (4) vom Obertrumm (6) der Längsförderer (2, 3) auf die Oberseite des Untertrumms (7) der Längsförderer umsetzbar sind.

**Claims**

1. Conveyor device, more particularly a retarding-roll conveyor or a twin-belt conveyor, with workpiece carriers (4) located on both sides on spaced longitudinal conveyors (2, 3), characterised in that the workpiece carriers (4) have an adjustable width, in such a manner, that whilst retaining their horizontal position, they are movable between the longitudinal conveyors (2, 3) vertically in elevationally offset conveyor planes by means of an adjustable lift (5).

2. Conveyor device according to Claim 1, characterised in that each workpiece carrier (4) has lateral support rails (8, 9) fastened to guide bolts (10, 11, 12, 13) mounted for transverse displacement, which support rails are oppositely displaceable by means of a common setting mechanism (19).

3. Conveyor device according to Claim 2, characterised in the provision of setting stops (44) preventing an inward pushing of the supporting rails (8, 9) by external compressive forces.

4. Conveyor device according to one of Claims 1 to 3, characterised in that the setting stops (44) are constituted by at least one arrester ball, spring-loaded, engaging partly into a recess on the periphery of the rotary plate (20).

5. Conveyor device according to one of Claims 1 to 4, characterised in that the setting mechanism (19) comprises lugs (47) connected with the support rails (8, 9) as well as guide channels (43) on the transfer plate (42) of the lift (5), and further lugs on the longitudinal conveyors.

6. Conveyor device according to one of Claims 1 to 4, characterised in that the setting mechanism (19) includes a rotary plate (20) movable by means of an actuator device in the transfer plate (42) of a lift (5), the rotary movement of which plate is transformed into a translational movement of the support rails (8, 9) by means of setting members.

7. Conveyor device according to Claim 6, characterised in that the rotary plate (20) is provided with a toothing which meshes with toothed racks on the support rails.

8. Conveyor device according to Claim 6, characterised in that it comprises pivotal setting levers (32, 33), which are articulated at both ends to the rotary plate (20) or one of the support rails (8, 9) respectively.

9. Conveyor device according to one of Claims 5 to 7, characterised in that on the transfer plate (42) of the lift (5) there is provided a rotatably mounted setting member (46) linked to a setting motor, which member engages into a longitudinal channel (29) of the underside of the rotary plate (20).

10. Conveyor device according to one of Claims 1 to 8, characterised in that the guides for the mutually opposing guide support bolts (10, 11, 12, 13) are arranged at a distance from each other and that on the transfer plate of the lift (5) there are arranged shoulders (45) projecting between the guides and having bores flush with the guides, into which bores the guide support bolts (10, 11, 12, 13) can engage as indexing bolts.

11. Conveyor device according to one of Claims 1 to 10, characterised in that the workpiece carriers (4) are transferable from the upper strand (6) of the longitudinal carriers (2, 3) to the upper face of the lower strand (7) of the longitudinal carriers.

**Revendications**

1. Dispositif de transport, notamment transporteur d'accumulation à chaîne à rouleaux ou convoyeur à bandes jumelées, comportant des porte-pièces (4) supportés, sur leurs deux côtés, par des convoyeurs longitudinaux (2, 3) distants l'un de l'autre, caractérisé en ce que les porte-pièces (4) possèdent une largeur réglable de telle sorte que, tout en conservant leur position horizontale, ils peuvent être déplacés verticalement, entre les convoyeurs longitudinaux latéraux (2, 3), dans des plans de transport décalés en hauteur, à l'aide d'un élévateur (5) déplaçable entre les convoyeurs longitudinaux (2, 3).

2. Dispositif de transport selon la revendication 1, caractérisé en ce que chaque porte-pièce (4) comporte des rails latéraux d'appui (8, 9), qui sont fixés sur des broches de support et de guidage (10, 11, 12, 13) montées de manière à être déplaçables transversalement, et sont déplaçables dans des directions opposées au moyen d'un dispositif d'entraînement commun (19).

3. Dispositif de transport selon la revendication 2, caractérisé par des organes de blocage d'entraînement (44) empêchant le retrait des rails d'appui (8, 9) sous l'action de forces extérieures de compression.

4. Dispositif de transport selon l'une des revendications 1 à 3, caractérisé en ce que les organes de blocage d'entraînement (44) sont formés par au moins une bille d'encliquetage chargée par un ressort et s'engageant partiellement dans un renfoncement ménagé sur le pourtour du disque rotatif (20).

5. Dispositif de transport selon l'une des revendications 1 à 4, caractérisé en ce que le dispositif d'entraînement (19) comporte des tétons d'entraînement (47) reliés aux rails d'appui (8, 9) et des coulisses de guidage (43) prévues sur le plateau de transfert (42) de l'élévateur (5), ainsi que des organes d'entraînement situés sur les convoyeurs longitudinaux.

6. Dispositif de transport selon l'une des revendications 1 à 4, caractérisé en ce que le dispositif d'entraînement (19) contient un disque rotatif (20), qui est déplaçable, au moyen d'un dispositif d'actionnement, dans le plateau de transfert (42) d'un élévateur (5) et dont le mouvement de rotation est transformé par des organes de réglage en un déplacement de translation des rails d'appui (8, 9).

7. Dispositif de transport selon la revendication 6, caractérisé en ce que le disque rotatif (20) comporte une denture engrenant avec des crémaillères situées sur les rails d'appui.

8. Dispositif de transport selon la revendication 6, caractérisé par des leviers d'entraînement pivotants (32, 33) qui sont articulés des deux côtés sur le disque rotatif (20) ou sur l'un des rails d'appui (8, 9).

9. Dispositif de transport selon l'une des revendications 5 à 7, caractérisé en ce que sur le plateau de transfert (42) de l'élévateur (5) il est prévu une barrette d'entraînement (46) qui est reliée à un moteur d'entraînement, est montée rotative et s'engage dans une rainure longitudinale (29) de la face inférieure du disque rotatif (20).

10. Dispositif de transport selon l'une des revendications 1 à 8, caractérisé en ce que les guides pour des broches de support et de guidage (10, 11, 12, 13), situées réciproquement en vis-à-vis, sont disposés à distance les uns des autres et en ce que sur la plaque de transfert de l'élévateur (5) se trouvent disposés des organes saillants (45), qui pénètrent entre les guides, comportent des perçages alignés avec les guides et dans lesquels les broches de support et de guidage (10, 11, 12, 13) peuvent s'engager à la manière de broches d'indexage.

11. Dispositif de transport selon l'une des revendications 1 à 10, caractérisé en ce que les porte-pièces (4) peuvent être transférés du brin supérieur (6) des convoyeurs longitudinaux (2, 3) sur la face supérieure du brin inférieur (16) de ces convoyeurs.

FIG. 1

FIG. 2

**FIG. 3**

**FIG. 4**

FIG. 5

FIG. 6

FIG. 7

FIG. 8